# EUROPEAN PATENT APPLICATION

(11) **EP 2 826 351 A1**
(43) Date of publication of application: **21.01.2015**
(21) Application number: 13186520.6
(22) Date of filing: 27.09.2013
(51) Int. Cl.: A01B 1/02

(54) **Asymmetric terebrating shovel with lateral displacement slide surface and pivoting lever leg**

(30) Priority: 15.07.2013 US 201361957915 P; 16.08.2013 US 201313987636
(71) Applicant: Curry, Jon K., Chino Valley, AZ 86323 (US)
(72) Inventor: Curry, Jon K., Chino Valley, AZ 86323 (US)
(74) Representative: MacLachlan & Donaldson

(57) **Abstract**

The asymmetrical head of a shovel incorporates a vertically oriented edge extending upwardly from the tip of the head to a recessed leading edge. The construction of the head permits it to function both as a pivot and as a lever, as well as facilitating the initial penetration of the head in soil.

## Description

This invention relates to tools.

A wide variety of tools have been developed. Those of skill in the art have for many years endeavored to produce improved tools which facilitate the completion of various tasks.

Accordingly, it would be highly desirable to provide an improved tool.

Therefore, it is a principal object of the instant invention to provide a new hand tool.

This and other, further and more specific objects and advantages of the invention will be apparent to those skilled in the art from the following detailed description thereof, taken in conjunction with the drawings, in which:
Fig. 1 is a perspective view illustrating a shovel constructed in accordance with the principles of the invention;
Fig. 2 is a perspective view illustrating a shovel constructed in accordance with an alternate embodiment of the invention;
Fig. 3 is a front view illustrating a shovel constructed in accordance with another embodiment of the invention;
Fig. 4 is a perspective view illustrating a conventional shovel design;
Fig. 5 is a perspective view illustrating the shovel of Fig. 4 modified in accordance with another embodiment of the invention;
Fig. 6 is a perspective view illustrating a conventional snow shovel;
Fig. 7 is a front view illustrating the snow shovel of Fig. 6 modified in accordance with the invention;
Fig. 8 is a perspective view produced partially as a ghost image and illustrating a conventional shovel utilized on a steam shovel;
Fig. 9 is a perspective view illustrating the shovel of Fig. 8 modified in accordance with the principles of the invention;
Fig. 10 is a front view illustrating the mode of operation of the shovel of Fig. 1;
Fig. 11 is a front view further illustrating the mode of operation of the shovel of Fig. 1;
Fig. 12 is a front view further illustrating the mode of operation of the shovel of Fig. 1;
Fig. 13 is a front view further illustrating the mode of operation of the shovel of Fig. 1;
Fig. 14 is a front view illustrating a shovel constructed in accordance with an alternate embodiment of the invention;
Fig. 15 is a perspective view illustrating a shovel constructed in accordance with still another embodiment of the invention; and,
Fig. 16 is a front view illustrating a shovel constructed in accordance with still a further embodiment of the invention.

Briefly, in accordance with the invention, an improved shovel to remove earth from around a generally cylindrically shaped root buried beneath the surface of the ground. The root has external side, top, and bottom surfaces. The shovel comprises an elongate handle having a proximate end, a distal end, and a longitudinal axis; and, an asymmetrical head. The head includes an upper end connected to the distal end of the handle and having first and second peripheral side edges generally parallel to the longitudinal axis; includes a lower end spaced apart from the upper end and the distal end of the handle, the lower end having a ground engaging edge; includes a face extending over the upper and lower ends; and, includes a tip shaped and dimensioned to penetrate earth. The lower end includes a first convex arcuate peripheral edge terminating at the tip and extending upwardly to the first peripheral side edge; includes a second convex arcuate peripheral edge spaced apart from the first arcuate peripheral edge, having an end point positioned above and spaced apart from the tip and below the upper end of the head, and extending upwardly from the end point to the second peripheral side edge; and, includes a substantially straight edge extending from the tip upwardly to the end point and generally parallel to the longitudinal axis. The ground engaging edge of the lower end collectively comprises the first and second arcuate peripheral edges and the substantially straight edge. The shovel is movable between at least three operative positions, a first operative rotation position with the tip contacting an external side surface of the root at a pivot point and the second arcuate peripheral edge spaced apart from the root; a second operative lever position with the handle generally vertically oriented, and with the second arcuate peripheral edge contacting the external top surface of the root and the straight edge contacting an external side surface of the root at a fulcrum point such that the tip is not positioned beneath the root; and, a third operative lever position with the handle canted away from vertical, and, with the second arcuate peripheral edge contacting the external top surface of the root and the straight edge contacting an external side surface of the root at a fulcrum point such that the tip is positioned beneath the root.

In a further embodiment of the invention, provided is a process to remove earth from around a generally cylindrically shaped root buried beneath the surface of the ground. The root has external side, top, and bottom surfaces. The process comprises the step of providing a shovel. The shovel comprises an elongate handle having a proximate end, a distal end, and a longitudinal axis; and, an asymmetrical head. The head includes an upper end connected to the distal end of the handle and having first and second peripheral side edges generally parallel to the longitudinal axis; includes a lower end spaced apart from the upper end and the distal end of the handle, the lower end having a ground engaging edge; includes a face extending over the upper and lower ends; and, includes a tip shaped and dimensioned to penetrate earth. The lower end includes a first convex arcuate peripheral edge terminating at the tip and extending upwardly to the first peripheral side edge; includes a second convex arcuate peripheral edge spaced apart from the first arcuate peripheral edge, having an end point positioned above and spaced apart from the tip and below the upper end of the head, and extending upwardly from the end point to the second peripheral side edge; and, includes a substantially straight edge extending from the tip upwardly to the end point and generally parallel to the longitudinal axis. The ground engaging edge of the lower end collectively comprises the first and second arcuate peripheral edges and the substantially straight edge. The shovel is movable between at least three operative positions, a first operative rotation position with the tip contacting an external side surface of the root at a pivot point and the second arcuate peripheral edge spaced apart from the root; a second operative lever position with the handle generally vertically oriented, and with the second arcuate peripheral edge contacting the external top surface of the root and the straight edge contacting an external side surface of the root at a fulcrum point such that the tip is not positioned beneath the root; and, a third operative lever position with the handle canted away from vertical, and, with the second arcuate peripheral edge contacting the external top surface of the root and the straight edge contacting an external side surface of the root at a fulcrum point such that the tip is positioned beneath the root. The process also comprises the steps of displacing the head into the ground to the first operative position; tilting the handle to pivot the shovel about the pivot point to loosen earth; displacing the head to the second operative position; tilting the handle to pivot the straight edge about the first fulcrum point; displacing the head to the third operative position; and, tilting the handle to pivot the straight edge about the second fulcrum point and move the tip to a point beneath the root.

In a further embodiment of the invention, provided is a process to remove earth from the ground. The process comprises the step of providing a tool. The tool comprises an elongate handle having a proximate end, a distal end, and a longitudinal axis; and, an asymmetrical head. The head includes an upper end connected to the distal end of the handle and having first and second peripheral side edges generally parallel to the longitudinal axis; a lower end spaced apart from the upper end and the distal end of the handle, the lower end having a ground engaging edge; a face extending over the upper and lower ends; and, a tip shaped and dimensioned to penetrate earth. The lower end includes a first convex arcuate peripheral edge terminating at the tip and extending upwardly to the first peripheral side edge; a second convex arcuate peripheral edge spaced apart from the first arcuate peripheral edge, having an end point spaced apart from and positioned above the tip and below the upper end of the head, and extending upwardly from the end point to the second peripheral side edge; and, a substantially straight edge extending from the tip upwardly to the end point and generally parallel to the longitudinal axis. The ground engaging edge of the lower end collectively comprises the first and second arcuate peripheral edges and the substantially straight edge. The process also includes the step of displacing the head into the ground to remove earth from the ground.

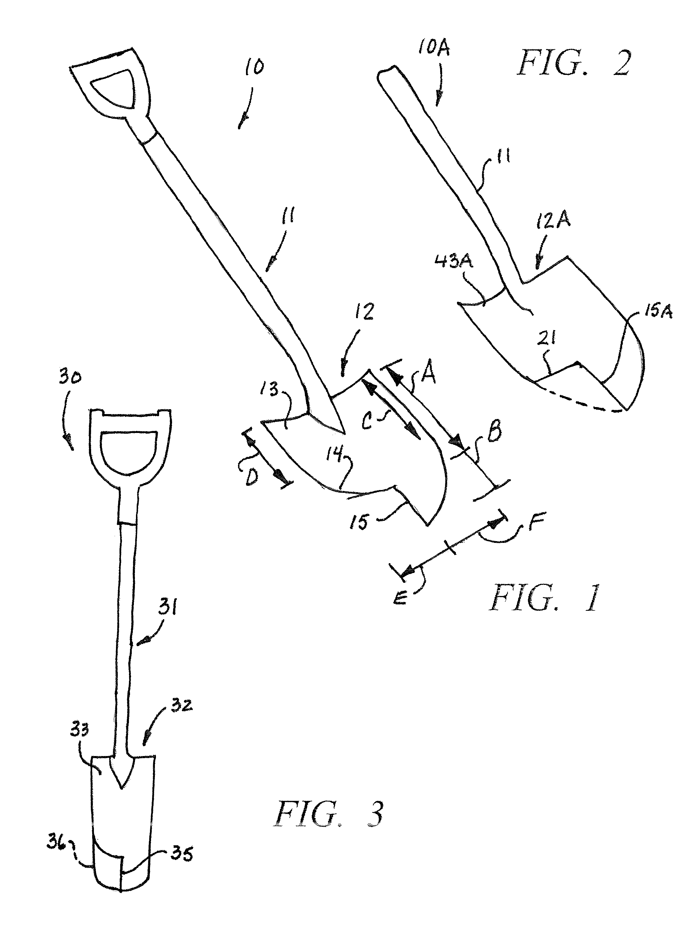

Turning now to the drawings, which describe the presently preferred embodiments of the invention for the purpose of illustrating the practice thereof and not by way of limitation of the scope of the invention, and in which like characters refer to corresponding elements throughout the several views, Figs. 1, 10 to 13 illustrate a shovel 10 constructed in accordance with one embodiment of the invention.

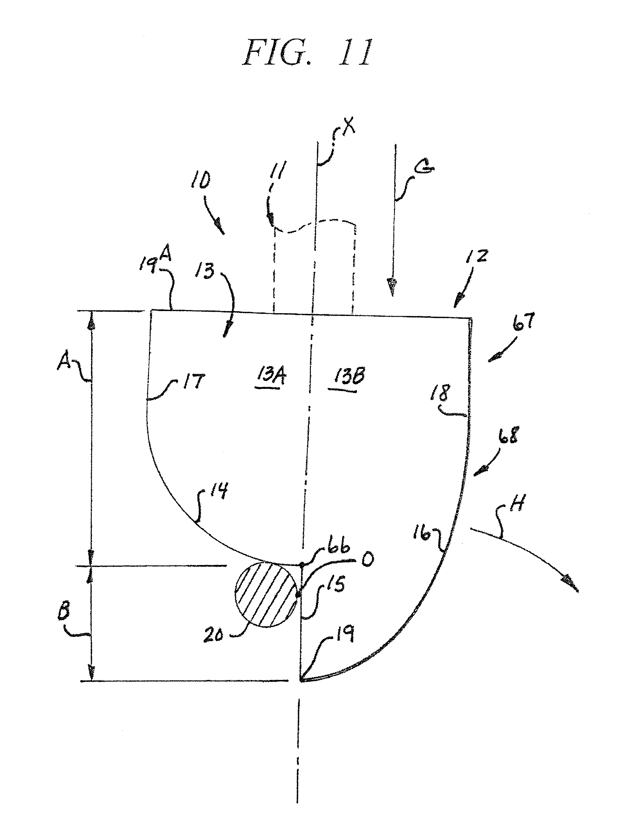

Manually operated shovel 10 is utilized to remove earth from around a generally cylindrically shaped root 20 buried beneath the surface of the ground. The root has external side, top, and bottom surfaces. Shovel 10 comprises an elongate handle 11 having a proximate end, a distal end, and a longitudinal axis X (Fig. 11), and, comprises an asymmetrical head 12. Head 12 includes an upper end 67 connected to the distal end of the handle and includes first 18 and second 17 peripheral side edges generally parallel to longitudinal axis X. Head 12 also includes a lower end 68 spaced apart from the upper end and the distal end of the handle 11. The lower end of head 12 has a ground engaging edge 14-15-16. Head 12 also includes a face 13 extending over the upper and lower ends, and a tip 19 shaped and dimensioned to penetrate earth. In Fig. 11, surface area 13A of face 13 extends to the left of axis X, while surface area 13B of face 13 extends to the right of axis X. Areas 13A and 13B together comprise substantially the entire surface area of face 13. Head 12 includes upper edge 19 (Fig. 11). When shovel 10 is in its normal upright orientation with axis X vertically oriented, edge 19 is generally horizontally oriented in the manner illustrated in Fig. 11.

Further, the lower end 68 of head 12 includes a first convex arcuate peripheral edge 16 terminating at tip 19 and extending upwardly to the first peripheral side edge 18 (Fig. 11).

The lower end of head 12 also includes a second convex arcuate peripheral edge 14 spaced apart from the first arcuate peripheral edge 16, and having an end point 66 spaced apart from and positioned above tip 19. Edge 14 is spaced below the upper end 67 of head 12, and extends upwardly from end point 66 to the second peripheral side edge 17. The radius of curvature of edge 16 near tip 19 ordinarily is different than the radius of curvature of edge 14 near point 66. The radius of curvature along most or all of arcuate edge 14 also is normally different from the radius of curvature along most or all of arcuate edge 16. In particular, the radius of curvature of edge 14 normally, although not necessarily, is less than that of edge 16.

The lower end 68 also includes substantially straight edge 15 extending from tip 19 upwardly to end point 66 and generally parallel to longitudinal axis X. When shovel 10 is in its normal upright orientation, edge 15 is substantially vertically oriented in the manner illustrated in Fig. 11. Head 12 can be constructed such that--when shovel 10 is in its normal upright orientation-edge 15 is canted from the vertical and is not substantially vertical. In order, however, for shovel 10 and edge 15 to perform the rotational and lever functions described below, it is preferred that head 12 be constructed such that edge 15 be canted no more than twenty degrees, preferably no more than ten degrees, and more preferably no more than five degrees from the vertical when shovel 10 is in its normal upright orientation, which orientation is illustrated in Fig. 11. The ground engaging edge of the lower end 68 of head 12 collectively comprises the first 16 and second 14 arcuate peripheral edges and the substantially straight vertically oriented edge 15.

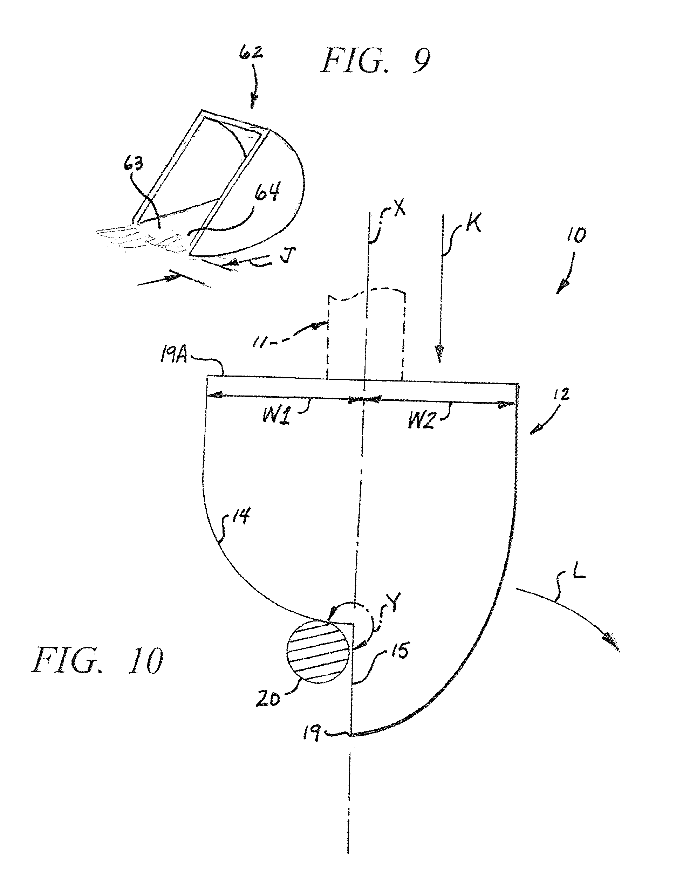

The overall length of head 12 equals the length indicated by arrows A plus the length indicated by arrows B (Fig. 11). Arrows B indicate the length of edge 15. The overall maximum width of head 12 equals the length indicated by arrows W1 plus the length indicated by arrows W2 (Fig. 10). Arrows Y in Fig. 10 indicate an exterior angle extending from edge 15 to the portion of edge 14 adjacent point 66 (Fig. 11). Angle Y can vary, and can, for example, be greater than 270. However, angle Y normally preferably is 270 degrees or less. An angle Y of 270 degrees or less is desirable because, when a downward force K (Fig. 10) is applied the head 12, angle Y facilitates arcuate surface 14 sliding laterally over root 20 in the manner indicated by arrow L in Fig. 10. This reduces the likelihood that downward movement of head 13 will be completely stopped if head 12 strikes a root 20.

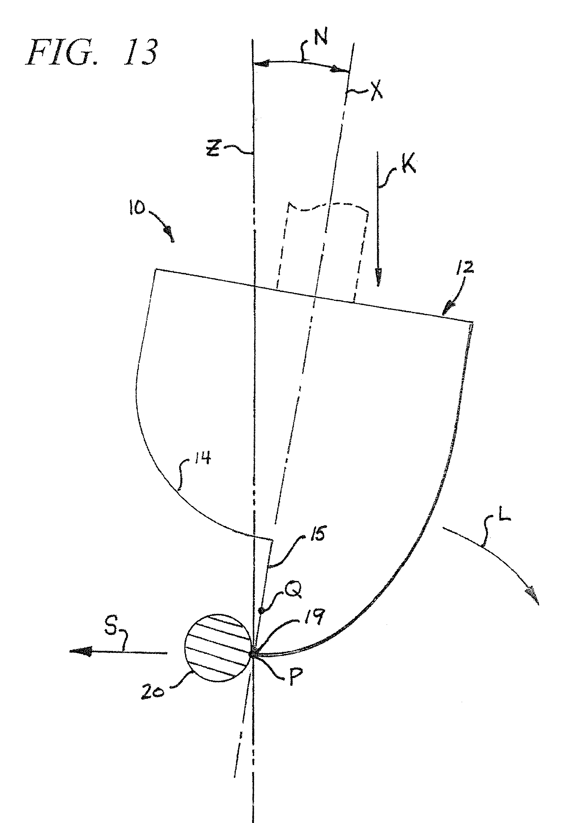

Shovel 10 is movable between at least three operative positions comprising first, second, and third operative positions. In the first operative position, illustrated in Fig. 13, tip 19 contacts an external side surface of a root 20 at a pivot point P while the second arcuate peripheral edge 14 is spaced apart from the root.

In the second operative lever position illustrated in Fig. 11, handle 11 is generally vertically oriented; the second arcuate peripheral edge 14 contacts the external top surface of the root 20; and, the straight edge 15 contacts an external side surface of the root 20 at a fulcrum point O such that tip 19 is not positioned directly beneath the root.

In the third operative lever position, handle 11 and head 12 are canted away from vertical, the second arcuate peripheral edge 14 contacts the external top surface of the root 20, and straight edge 15 contacting an external side surface of the root 29 at fulcrum point O such that tip 19 is positioned directly beneath the root 20.

Since shovel 10 is asymmetrical, the area of surface 13A is smaller than (or at least different from) the area of surface 13B. The ratio of the area of surface 13B to the area of surface 13A is in the range of 8.0:3.0 to 3.2:3.0, preferably 6.0:3.0 to 3.25:3.0, more preferably 5.0:3.0 to 3.5:3.0. The ratio of the total length of shovel 10 (i.e., the length of arrows A plus the length of arrows B) to the length of edge 15 (i.e., the length of arrows B) can vary as desired but preferably is in the range of 30.0:1.0 to 1.5 to 1.0, preferably 8.0:1.0 to 1.75:1.0, and more preferably 6.0:1.0 to 2.0 to 1.0.

In use of shovel 10, an upright individual grasps handle 11 and, in conventional fashion, places one a foot on upper edge 19A (Fig. 11) and presses downwardly with the foot to generate a force G to displace tip 19 into the ground. The use of vertical edge 15 in combination with arcuate edge 16 produces a point which functions to more readily penetrate soil that the generally semi-circular or semi-elliptical leading edge of a conventional shovel. Once shovel 10 has penetrated a desired distance into the ground, the shovel is extracted from the ground, carrying with it soil on the face 13 of the shovel.

The ability of tip 19 and edges 15 and 16 to more readily penetrate the ground is a particular important virtue of shovel 10. Edge 15 ordinarily provides insignificant frictional resistance as tip 19 travels into the ground. Similarly, edge 16 and the portion of face 13 intermediate edges 15 and 16 provides significantly less frictional resistance than does a conventional shovel which has a symmetrical head 12 that includes an opposing pair of edges 16 each extending upwardly away from each other and from the tip 19 of the shovel to produce a generally semi-circular or semi-elliptical leading edge. After head 12 travels into the ground a distance equal to the length B of edge 15, edge 14 begins to penetrate the ground and, along with the portion of face 12 extending upwardly from edge 14, to produce additional frictional resistance which makes forcing head 12 into the ground more difficult.

Shovel 10 can be positioned such that the shovel is substantially upright in the manner illustrated in Fig. 11 and such that tip 19 of the face of the shovel is positioned adjacent a side of a root 20 at a point P. The handle 11 of shovel 10 can then be manually tilted such that handle 11 and head 12 move laterally in the direction of arrow L to the canted position illustrated in Fig. 13. When handle 11 and head 12 move in this manner, they are, in essence, pivoting about point P and are using root 20 to counteract a force generated in the direction of arrow S when head 12 pivots in the direction of arrow L. Pivoting head 12 in this manner is useful in loosening earth to one side of root 20 when shovel 10 is being utilized to remove earth around root 20. Pivoting head 12 in this manner is useful because root 20 often typically does not move readily when shovel 10 initially removes earth from around root 20, and because the ability to position tip 19 at a side of root 20 facilitates using shovel 10 as a pivot tool.

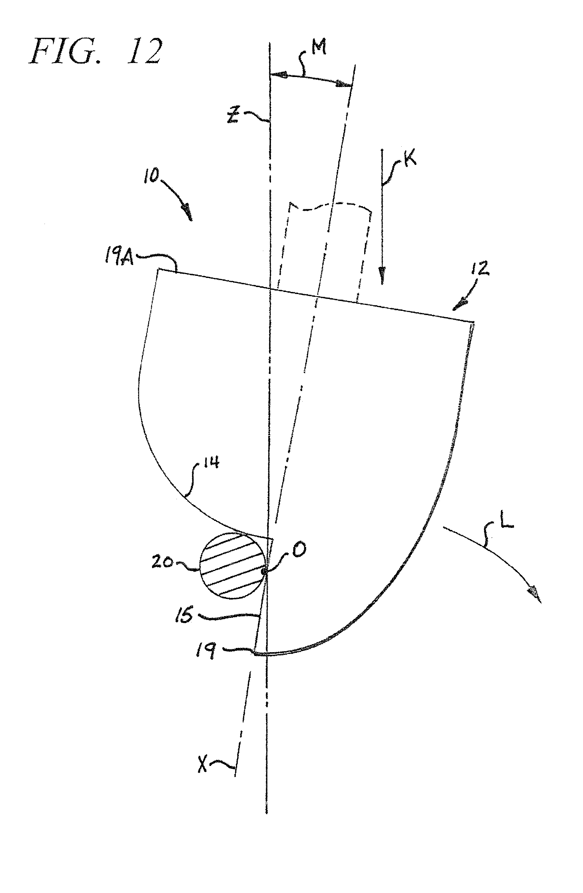

Shovel 10 can be positioned such that (a) the shovel 10 is substantially upright in the manner illustrated in Fig. 11, (b) a point O on edge 15 intermediate point 66 and tip 19 contacts a side of root 20, and (c) arcuate edge 14 contact the top of root 20. The handle 11 of shovel 10 can then be manually tilted such that handle 11 and head 12 move laterally in the direction of arrow H in Fig. 11 (or arrow L in Fig. 12) to the canted position illustrated in Fig. 12. When handle 11 and head 12 move in this manner, side 15 functions as a lever and pivots about a fulcrum represented by point O in Fig. 12. Pivoting head 12 in this manner is useful in a couple of respects. First, pivoting heat 12 to the position illustrated in Fig. 12 displaces tip 19 to a position beneath root 20 and functions to loosen earth beneath root 20. Second, pivoting head 12 in the direction of arrow L in Fig. 12 moves the convex edge 14 along the top of root 20. The upward convex shape of edge 14 promotes the tendency of edge 14 to slide laterally off root 20 in the direction of arrow L; this because the convex shape of edge 14 produces a lateral "slide inducing" force when an individual using shovel 10 presses shovel 10 downwardly in the direction of arrow K.

In Fig. 12, the longitudinal axis X is canted from vertical axis Z through the angle M. In Fig. 13, the longitudinal axis X is canted from vertical axis Z through the angle N.

In one embodiment of the invention, handle 11 is grasped adjacent upper edge 19 and head 12 is utilized like a hatchet, with edge 15 comprising the "cutting" edge that is strikes a piece of wood or other object to cut the wood.

The shovel 10A in Fig. 2 is comparable to shovel 10 except the arcuate edge 14 is replaced with straight edge 21. Shovel 10A includes handle 11 and head 12A. Head 12A includes face 43A and vertically oriented edge 15A.

The shovel 30 in Fig. 3 is comparable to shovel 10 except head 32 is narrower than head 12. Shovel 30 includes handle 31 outwardly depending from head 32. Head 32 includes face 33 and vertically oriented edge 35. Dashed line 36 represents the generally semi-circular or semi-elliptical edge that ordinarily would be found on a conventional shovel of the type represented by shovel 30.

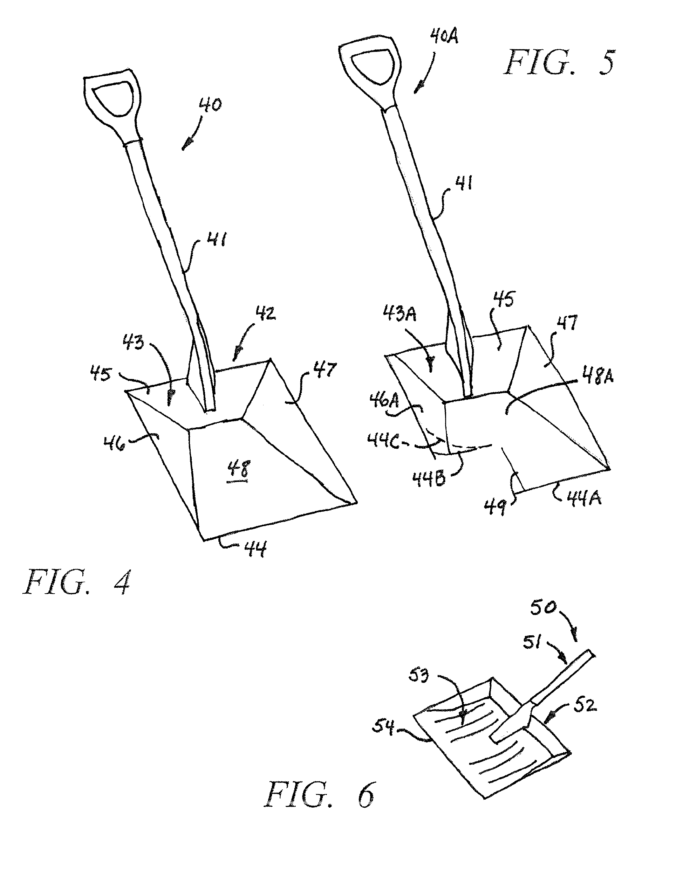

Fig. 4 illustrates a conventional shovel 40 including handle 41 and head 42. Head 42 includes a face including surfaces 45, 46, 47 which collectively cant downwardly to and terminate at surface 48. Surface 48 includes leading edge 44.

Shovel 40A in Figure 5 is generally equivalent to shovel 40 except that vertical edge 49 and leading edge 44B have, in accordance with the invention, been formed in the shovel. Consequently, leading edge 44 has been shortened to produce a smaller edge 44B, and the size of head 42 has been reduced to produce a surface 48A which is smaller than surface 48. The size of canted surface 46 is also reduced to produce surface 46A. Dashed line 44C indicates an arcuate leading edge construct which can, if desired, be utilized in place of leading edge 44B.

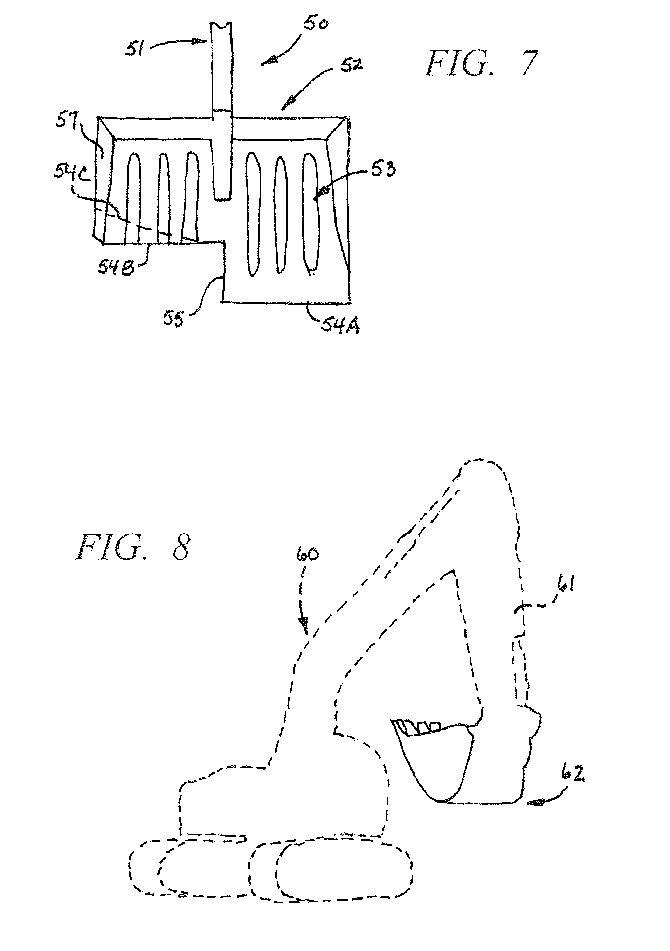

The snow shovel 50 illustrated in Fig. 6 includes handle 51 and head 52. Head 52 includes face 53 and leading edge 54. In Fig. 7, shovel 50 has been modified in accordance with the invention by forming a vertical edge 55 and horizontal leading edge 54B in head 52. Dashed line 54C indicates an arcuate leading edge which can, if desired, be utilized in place of leading edge 54B.

Fig. 8 illustrates a steam shovel 60 with a support arm (i.e., a "handle") 61. Shovel head 62 is mounted on the distal end of arm 61. In Fig. 9, head 62 has been modified in accordance with the invention by shortening one half 64 of the floor of the shovel. The other half 63 of the floor retains its conventional shape and dimension. The amount by which half 64 is shortened is indicated by arrows J.

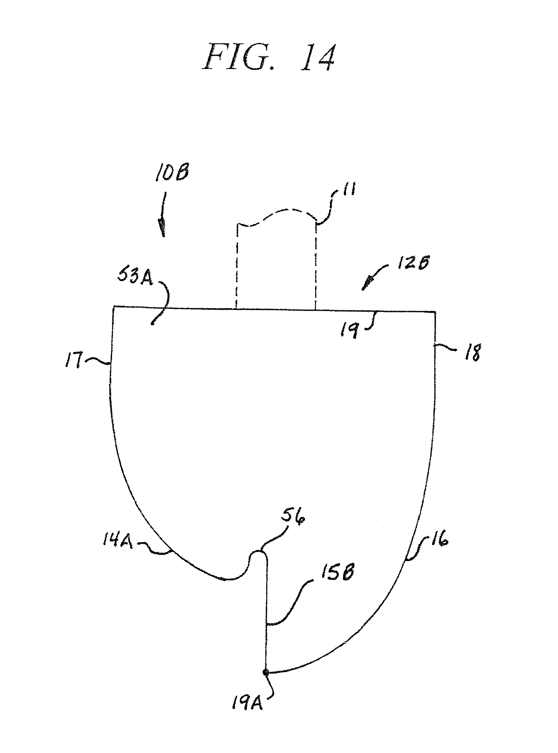

Fig. 14 illustrates a shovel 10B constructed in accordance with another embodiment of the invention and including an elongate handle 11, and including a head 12B with a face 53A, with tip 19A, and with peripheral edges 14A, 15B, 16, 17, and 18. Head 12B also includes one or more notches 56 formed intermediate edges 14A and 15B. The shape of notch 56 can vary and can, for example, be V-shaped instead of the U-shape illustrated in Fig. 14.

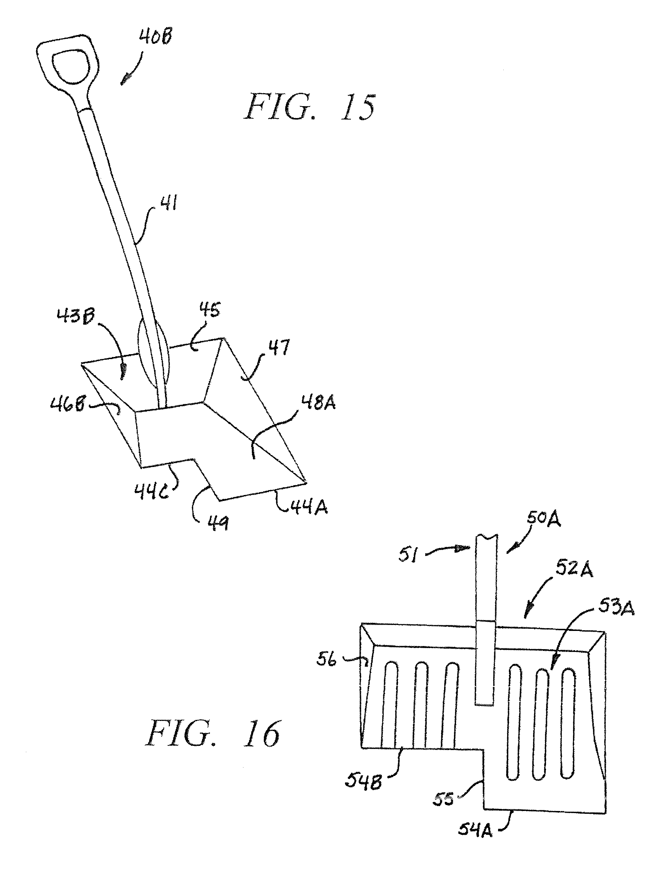

Shovel 40B in Fig. 15 is generally equivalent to shovel 40A in Fig. 5 except that the four sided portion of shovel 40A including surface 46A is replaced in shovel 40B by a three sided portion including surface 46B.

Similarly, shovel 50A in Fig. 16 is generally equivalent to shovel 50 in Fig. 7 except that the four sided portion of shovel 50 including surface 57 is replaced in shovel 50A by a three sided portion including surface 56.

Having set forth the presently preferred embodiments of our invention in such terms as to enable those skilled in the art to make and use the invention, I Claim:

## Claims

1. A shovel to remove earth from around a generally cylindrically shaped root buried beneath the surface of the ground, the root having external side, top, and bottom surfaces, the shovel comprising
(a) an elongate handle having a proximate end, a distal end, and a longitudinal axis; and,
(b) an asymmetrical head including
(i) an upper end connected to said distal end of said handle and having first and second peripheral side edges generally parallel to said longitudinal axis,
(ii) a lower end spaced apart from said upper end and said distal end of said handle, said lower end having a ground engaging edge,
(iii) a face extending over said upper and lower ends, and
(iv) a tip shaped and dimensioned to penetrate earth,
said lower end including
(v) a first convex arcuate peripheral edge terminating at said tip and extending upwardly to said first peripheral side edge,
(vi) a second convex arcuate peripheral edge spaced apart from said first arcuate peripheral edge, having an end point spaced apart from and positioned above said tip and below said upper end of said head, and extending upwardly from said end point to said second peripheral side edge, and
(vii) a substantially straight edge extending from said tip upwardly to said end point and generally parallel to said longitudinal axis,
said ground engaging edge of said lower end collectively comprising said first and second arcuate peripheral edges and said substantially straight edge,
said shovel being movable between at least three operative positions,
(viii) a first operative rotation position with said tip contacting an external side surface of the root at a pivot point and said second arcuate peripheral edge spaced apart from said root,
(ix) a second operative lever position with
said handle generally vertically oriented,
said second arcuate peripheral edge contacting the external top surface of the root and said straight edge contacting an external side surface of the root at a fulcrum point such that said tip is not positioned beneath the root, and
(x) a third operative lever position with
said handle canted away from vertical, and
said second arcuate peripheral edge contacting the external top surface of the root and said straight edge contacting an external side surface of the root at a fulcrum point such that said tip is positioned beneath the root.

2. A process to remove earth from the ground, the process comprising the steps of:
A. providing a tool comprising
(1) an elongate handle having a proximate end, a distal end, and a longitudinal axis; and,
(2) an asymmetrical head including
(a) an upper end connected to said distal end of said handle and having first and second peripheral side edges generally parallel to said longitudinal axis,
(b) a lower end spaced apart from said upper end and said distal end of said handle, said lower end having a ground engaging edge,
(c) a face extending over said upper and lower ends, and
(d) a tip shaped and dimensioned to penetrate earth,
said lower end including
(e) a first convex arcuate peripheral edge terminating at said tip and extending upwardly to said first peripheral side edge,
(f) a second convex arcuate peripheral edge spaced apart from said first arcuate peripheral edge, having an end point spaced apart from and positioned above said tip and below said upper end of said head, and extending upwardly from said end point to said second peripheral side edge, and
(g) a substantially straight edge extending from said tip upwardly to said end point and generally parallel to said longitudinal axis,
said ground engaging edge of said lower end collectively comprising said first and second arcuate peripheral edges and said substantially straight edge; and,
B. displacing said head into the ground to remove earth from the ground.
